Europäisches Patentamt

European Patent Office

Office européen des brevets

(19)

(11) Numéro de publication : **0 496 682 A1**

(12) **DEMANDE DE BREVET EUROPEEN**

(21) Numéro de dépôt : 92420022.3

(22) Date de dépôt : **21.01.92**

(51) Int. Cl.⁵ : **C04B 28/14,** C09D 5/34,
// (C04B28/14, 14:20, 14:28,
14:38, 24:16, 24:22, 24:26,
24:38, 40:06)

(30) Priorité : **22.01.91 FR 9100896**

(43) Date de publication de la demande :
**29.07.92 Bulletin 92/31**

(84) Etats contractants désignés :
**AT BE CH DE DK ES FR GB GR IT LI LU NL PT
SE**

(71) Demandeur : **PLATRES LAFARGE
5 Avenue de l'Egalité
F-84800 Isle-Sur Sorgue (FR)**

(72) Inventeur : **Amathieu, Lorris-Michel
45 Avenue du Teil
F-26200 Montelimar (FR)**
Inventeur : **Coudene, Jean-Louis
Quartier St Pierre
F-07400 Le Teil D'Ardèche (FR)**
Inventeur : **Leclerq, Claude
46 Le Cours
F-84210 Saint Didier (FR)**

(74) Mandataire : **Tilloy, Anne-Marie et al
IXAS Conseil, 15, rue Emile Zola
F-69002 Lyon (FR)**

(54) **Enduit pour joint.**

(57)    L'invention a pour objet un enduit pour le remplissage des joint formés par les bords latéraux et contigus de deux plaques de plâtre et la formation d'un joint sans bande, caractérisés en ce que l'enduit comprend en pourcentage en poids calculé par rapport à la totalité des matières sèches :
— 5 % à 30 % de plâtre semi-hydrate,
— 7 % à 25 % de polymère en suspension dans une phase aqueuse et/ou en poudre redispersable,
— si nécessaire, d'autres additifs pour le réglage du temps de prise et/ou le réglage de la qualité de la pâte et/ou l'adhérence de l'enduit,
— et au moins une charge inerte en une quantité complémentaire à 100 %.

EP 0 496 682 A1

L'invention concerne un enduit pour le remplissage des joints formés par les bords latéraux et contigus de deux plaques de plâtre et la formation d'un joint sans bande.

La plaque de plâtre est un matériau de construction se présentant sous forme de panneaux de plusieurs m2 (classiquement 2,50 m à 3,00 m de long par 1,20 m de large) et d'une épaisseur faible (classiquement 10 mm à 20 mm). Dans leur section, ces panneaux sont constitués d'une âme en plâtre, appelée "coeur", revêtue sur chacune de ses faces d'un carton spécial.

Cette association carton-plâtre forme un composite dont le comportement mécanique est celui d'un matériau non fragile, c'est-à-dire susceptible de supporter des déformations importantes dans le domaine élastique et de continuer à se déformer largement dans le domaine élasto-plastique avant sa rupture.

Ce comportement non fragile est l'une des qualités de la plaque de plâtre ayant favorisé son très large développement pour la réalisation des ouvrages de second-oeuvre tels que cloisons, contre-cloisons, plafonds.

En effet, il est bien connu que tous les bâtiments sont plus ou moins sujets à des mouvements entraînant des déformations cycliques ou irréversibles dont les causes sont multiples :

– contraintes internes générées par les matériaux eux-mêmes (dilatation ou retrait thermique, variations dimensionnelles liées aux variations d'humidité) ou générées par des erreurs de conception et de réalisation (tassement des fondations, sous-estimation de certains efforts) ;

– efforts externes liés aux conditions normales d'exploitation du bâtiment (surcharges climatiques comme la neige et le vent, sollicitations localisées et instantanées par effet de choc, etc.).

Les ouvrages de second oeuvre, en plus de leurs déformations propres, doivent être en mesure de supporter celles du gros-oeuvre, du fait qu'ils lui sont solidarisés.

Compte-tenu de leur comportement mécanique mentionné plus haut, les plaques de plâtre en elles-mêmes supportent parfaitement ces sollicitations.

Mais ces ouvrages en plaques de plâtre sont constitués de plaques assemblées bord à bord, ou bout à bout, par des joints.

Ces joints doivent donc également être en mesure de supporter ces déformations sans fissuration, faute de quoi ils n'assureraient plus leur fonction esthétique en masquant parfaitement le raccordement de deux plaques adjacentes.

On voit par conséquent que la fonction esthétique des joints implique une fonction mécanique.

Les mouvements du gros oeuvre mentionnés plus haut mettent en jeu des efforts considérables, efforts susceptibles de se reporter en tout ou partie sur les ouvrages de second oeuvre.

A titre d'exemple, on peut évaluer les efforts générés par un mur de béton soumis à un écart de température de l'ordre de 15°C, au moyen de l'expression :

$$\sigma = E \times \Delta 1/1$$

dans laquelle $\sigma$ est la contrainte, E est le module d'élasticité du matériau considéré, ce module étant significatif de sa raideur et $\Delta 1/1$ est sa variation dimensionnelle relative.

L'écart de température de 15°C entraîne une variation dimensionnelle facilement calculable par le coefficient de dilatation thermique et le module d'élasticité du béton étant bien connu, on aboutit à une contrainte de l'ordre de 40 daN/cm2 à 50 daN/cm2 si la déformation du mur est entièrement contrariée par la présence d'éléments de constructions voisins. Un tel niveau de contrainte génère un effort de plusieurs dizaines de tonnes, compte-tenu des sections mises en jeu dans un mur. Dans la réalité, la déformation n'est jamais entièrement contrariée et il se produit une déformation partielle avec corrélativement une chute partielle de la contrainte mentionnée plus haut, mais aussi, et surtout, une déformation correspondante des éléments de construction voisins jusqu'à un nouvel équilibre. Dans ce nouvel état d'équilibre, les efforts encore développés par le mur considéré sont annulés par les efforts de réaction développés par les éléments voisins, qui peuvent être, en particulier, des éléments du second oeuvre en plaque de plâtre. Ceux-ci, n'étant pas conçus pour résister à des efforts élevés de plusieurs tonnes, se sont donc déformés largement pour atteindre cet état d'équilibre, déformation que les joints doivent être en mesure de supporter sans fissuration, pour continuer à remplir leur fonction.

On voit par conséquent que la déformabilité d'un joint est une condition indispensable à son bon comportement dans l'ouvrage, le seul critère de résistance n'étant pas une condition suffisante.

Toutefois, il ne faut pas conclure des explications qui précèdent que la déformabilité d'un joint est le seul critère de qualité significatif et que sa résistance n'importe pas. Celle-ci est nécessaire d'une part pour assurer une dureté de surface de même niveau que celle de la plaque de plâtre et d'autre part pour conférer au joint une énergie de rupture d'un niveau suffisant pour résister convenablement aux sollicitations ponctuelles et instantanées, comme les chocs, lorsque le joint n'est pas adossé à un support.

En définitive, il ressort des considérations qui précèdent qu'un joint de plaques de plâtre mécaniquement satisfaisant se caractérise par un couple effort/déformation dont les valeurs doivent être voisines de celles du joint à bande. En effet, les joints à bande sont suffisamment résistants et déformables sous l'action d'une contrainte pour garantir la pérennité de ce joint.

Dans les ouvrages en plaques de plâtre, les joints entre plaques sont classiquement réalisés par une bande à joint en papier ou en fibres, jouant le rôle d'armature, noyée dans un enduit à joint constitué d'une pâte, prête à l'emploi ou préparée sur chantier, de composition essentiellement minérale et susceptible de durcir par séchage ou par la conjugaison d'un effet de prise et de séchage.

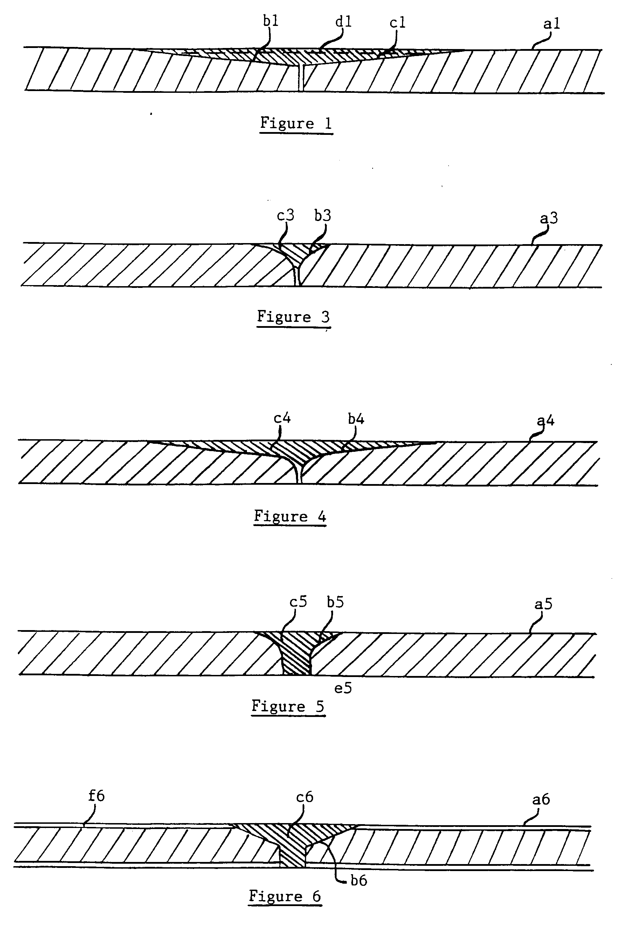

Pour éviter toute surépaisseur par rapport au parement des plaques de plâtre, les bords des plaques de plâtre traitées par joint à bande comportent un léger "aminci" s'amorçant à quelques centimètres du bord de la plaque. Comme on peut le voir sur la figure 1, les deux amincis juxtaposés de deux plaques (a1) adjacentes forment par conséquent un sillon (b1) très évasé destiné à recevoir l'enduit (c1) et la bande (d1), tout en préservant la planéité du parement.

Ces joints, étant de nature composite (matrice minérale fragile combinée à une armature défragilisante) comme la plaque de plâtre elle-même, présentent une déformabilité suffisante avant rupture, pour assurer la continuité mécanique propre à la fonction du joint et ce, malgré une résistance sensiblement inférieure à celle de la plaque de plâtre elle-même.

La caractérisation effort/déformation de ce type de joint par un essai de flexion est représentée par la courbe (10) de la figure 2. Pour cet essai, référencé essai A et rappelé dans les exemples, on assemble , grâce au joint, deux plaques de plâtre d'épaisseur 12,5 mm et de dimensions 20 cm x 40 cm, de sorte à former une maquette 40 cm x 40 cm ; cette maquette est ensuite placée sur deux appuis distants de 35 cm, le joint orienté vers le bas. La charge étant appliquée au centre, au droit et à l'opposé du joint, on enregistre la flèche prise par la maquette.

Le comportement mécanique ,satisfaisant de ce type de joints dans les ouvrages est démontré par l'expérience que représentent les plaques de plâtre mises en oeuvre depuis des dizaines d'années dans des bâtiments de natures très diverses telles que les habitations collectives ou individuelles, les bâtiments du secteur industriel ou tertiaire, les structures en béton, maçonneries, acier, bois, etc.

La courbe (10) de la figure 2 peut donc servir de référence en terme de caractérisation mécanique d'un joint satisfaisant.

D'autre part, l'art antérieur de ces joints à bande maîtrise parfaitement les aspects :
– d'ouvrabilité de la pâte qui facilite le travail du poseur,
– de non retrait de la pâte lors de son séchage, de sa dureté finale et de son grain de surface comparables à celles de plaques de plâtre adjacentes, toutes propriétés qui permettent au joint d'assurer sa fonction esthétique, notamment lors de la mise en peinture.

En revanche, ces joints à bande présentent l'inconvénient d'être délicats à réaliser.

En effet, pour que le joint ne soit pas visible une fois posé, on doit veiller à tendre suffisamment la bande sinon il se produit des cloques, mais la tension imposée à la bande ne doit pas être trop importante sinon elle risque de se décoller. En outre, la deuxième passe d'enduit qui intervient après la pose de la bande ne peut être effectuée qu'après durcissement de l'enduit (ce qui, dans certains cas, nécessite un temps assez long), sinon la bande risque d'être décollée. L'incorporation d'une armature dans le corps du joint complique donc sa réalisation et nécessite un personnel très qualifié et des temps de pose pénalisants.

De plus, dans certains cas, notamment lors de la réalisation de plafonds, les joints doivent être traités non seulement entre bords amincis, mais également entre bouts de plaques que le procédé de fabrication des plaques ne permet pas d'amincir. Dans ce cas, le système de joint à bande n'est pas satisfaisant, car il conduit fatalement à une surépaisseur qui ne peut être dissimulée que par le savoir-faire d'un poseur très qualifié y consacrant beaucoup de temps.

Pour pallier ces difficultés, des enduits pour joint sans armature ont été proposés. Le brevet européen 94 507 propose de combiner une géométrie particulière de bord avec un enduit à base essentiellement de plâtre (au moins 70 % en poids de semi-hydrate) et de divers additifs, ce bord ayant une géométrie en quart de cercle.

Comme on peut le voir sur la figure 3, du fait de l'absence de la bande qui assure le pontage du joint par effet d'armature, la géométrie du bord (b3) en quart de cercle est nécessaire lorsqu'il n'y a pas de bande afin de permettre à l'enduit (c3) de pénétrer profondément entre les plaques pour en assurer la soudure, ce que ne permet pas le bord (b1) aminci de la figure 1. La nécessité d'un bord différent et donc d'une plaque différente pour le joint sans bande par rapport au joint à bande, apparaît comme un premier inconvénient qui complique la gestion de l'ensemble de la filière : fabricants de plaques, négociants, entreprises de pose.

L'autre inconvénient du joint selon ce brevet 94 507 est de se caractériser par une résistance en traction directe d'au moins 70 N/cm. Compte-tenu de sa composition, ce niveau de résistance est associé à un allongement à rupture de 0,2 mm environ. Ceci traduit un comportement raide puisque, dans les mêmes conditions de traction directe, un enduit à bande se caractérise par des résistances un peu inférieures mais une déformation à rupture au moins deux à trois fois supérieure.

Pour pallier cet inconvénient lié à la nécessité d'avoir une configuration de bord particulière pour le jointoiement sans bande, l'art antérieur propose une géométrie de bord mixte (b4), à la fois aminci et arrondi représentée sur la figure 4.

C'est le cas du brevet européen 227 876 qui décrit un enduit pour joints composé essentiellement de plâtre alpha (60 % à 90 % en poids) et de différents additifs dont des agents épaississants rétenteurs d'eau, de l'éther d'amidon, de l'alcool polyvinylique et d'un polymérisat vinylique sous la forme d'une poudre redispersable.

La courbe (20) caractérise un enduit sans bande dont la composition correspond à celle décrite dans le brevet 227 876. Cette courbe, établie dans les mêmes conditions que la courbe (10) pour le joint à bande, permet de bien visualiser la différence de comportement effort/déformation entre les enduits sans bande décrits dans les brevets 94 507 et 227 876 et le joint à bande classique. Comme indiqué plus haut, on observe que la résistance des joints sans bande se situe bien au niveau de celle d'un joint à bande, mais que leur déformabilité reste de l'ordre de trois fois inférieure. De plus, l'allure linéaire de la courbe (20) s'interrompant sans inflexion préalable à la rupture est le signe d'une comportement mécanique de type fragile.

Un inconvénient de ce type de joint sans bande réside dans sa raideur trop élevée, d'où une déformabilité avant fissuration insuffisante et ce, malgré une résistance satisfaisante.

Ce défaut est particulièrement gênant puisque, dans le bâtiment, les mouvements, même de faible amplitude, générés sous l'effet soit de la stabilisation des fondations soit des variations des conditions thermiques et hygrométriques en fonction des saisons ou du jour et de la nuit, peuvent entraîner des déformations au niveau de l'enduit supérieures à celles qu'il peut tolérer avant rupture.

La demande de brevet européen 303 071 propose un enduit obtenu à partir d'une composition constituée :
– de plâtre, essentiellement du semi-hydrate bêta à raison de 30 % à 40 % en poids,
– de copolymère d'acétate vinylique et d'éthylène, sous la forme d'une poudre de fines particules redispersables, à raison de 10 % à 25 % en poids et dans un rapport pondéral de l'ordre de 1/2 par rapport au plâtre,
– de microbilles creuses de verre
– et de divers additifs tels que l'alcool polyvinylique, des fibres cellulosiques, de la méthylcellulose et du carbonate de calcium comme matière de remplissage.

La raideur de ce joint reste supérieure à celle d'un joint avec armature. Lors des essais de résistance en flexion référencés essai B et rappelés dans les exemples, on réunit deux plaques rectangulaires par un joint conforme à ce brevet pour former une plaque de 30 cm x 30 cm, avec une portée de 20 cm, la charge étant appliquée à mi-distance, on a en effet obtenu une déformation à rupture de 1,5 mm sous l'action d'une force de 13 N par cm de joint.

Dans les mêmes conditions, un enduit posé avec une armature donne une résistance de 10 N/cm de joint pour une déformation à rupture supérieure à 2 mm.

Un autre inconvénient de ces enduits sans bande, résultant de leur comportement élastique fragile, est leur sensibilité à la fissuration, notamment en cas de sollicitations accentuées comme les chocs lourds ou les déformations importantes. Cette sensibilité est d'ailleurs confirmée par les observations faites sur les ouvrages traités avec ces joints sans bande.

Ce qui précède confirme que la seule résistance du joint est une condition nécessaire mais non suffisante à l'égard de sa pérennité.

L'un des moyens proposés par l'art antérieur pour remédier à cette raideur excessive consiste à ménager un jeu (e5) de 3 mm à 5 mm entre les plaques (a5), au moyen de cales insérées entre les deux bords (b5) [se reporter à la figure 5].

L'ajout de ces cales lors de la mise en oeuvre est un inconvénient à l'égard de la productivité de pose et de la consommation d'enduit (c5).

Toutefois, en permettant à l'enduit (c5) de pénétrer dans toute la profondeur du joint de telle sorte que la liaison entre les plaques (a5) se fasse sur toute leur épaisseur, on améliore la résistance de ce joint sans bande avec jeu (ses caractéristiques effort/déformation sont représentées par la courbe (30) sur la figure 2) par rapport au joint sans bande et sans jeu (courbe (20) de la figure 2). L'amélioration est encore plus sensible pour le traitement des joints en bout de plaque où il est nécessaire de biseauter mécaniquement les bouts de plaques puisque l'aminci et l'arrondi n'existent pas. Comme on peut le voir sur la figure 6, sur les bords biseautés (b6) des plaques (a6), l'enduit (c6) doit par conséquent adhérer sur le coeur en plâtre de la plaque et non sur le carton (f6), ce qui donne généralement de moins bons résultats.

En revanche, on observe que la raideur propre du système reste inchangée et le gain de déformabilité avant la rupture n'est lié qu'à cet accroissement de résistance. Ceci est bien mis en évidence par les courbes (20) et (30) de la figure 2. Au demeurant, même si cette amélioration de la résistance du joint avec jeu marque un progrès par rapport au joint sans jeu, elle est largement insuffisante pour conférer à ce type de joint la sécurité d'un joint à bande qui reste de l'ordre de deux à trois fois plus déformable.

Cet écart est particulièrement mis en évidence par l'essai de chocs conventionnels sur des cloisons simi-

4

laires ne différant que par le traitement des joints. A titre d'exemple, une cloison de type 72/48, soit une cloison d'épaisseur totale égale à 72 mm et comprenant une ossature interne de 48 mm d'épaisseur insérée entre deux plaques de plâtre de 12,5 mm d'épaisseur chacune, traitée en joints sans bande, présente une fissuration des joints pour une énergie de choc de l'ordre de 100 joules alors que la cloison traitée par des joints à bande ne présente les mêmes désordres qu'au-delà de 200 joules (le test de résistance aux chocs employé pour mesurer l'énergie de choc supportée par la cloison consiste à lancer sur la cloison un corps mou de 50 kg, à l'opposé et au droit du joint).

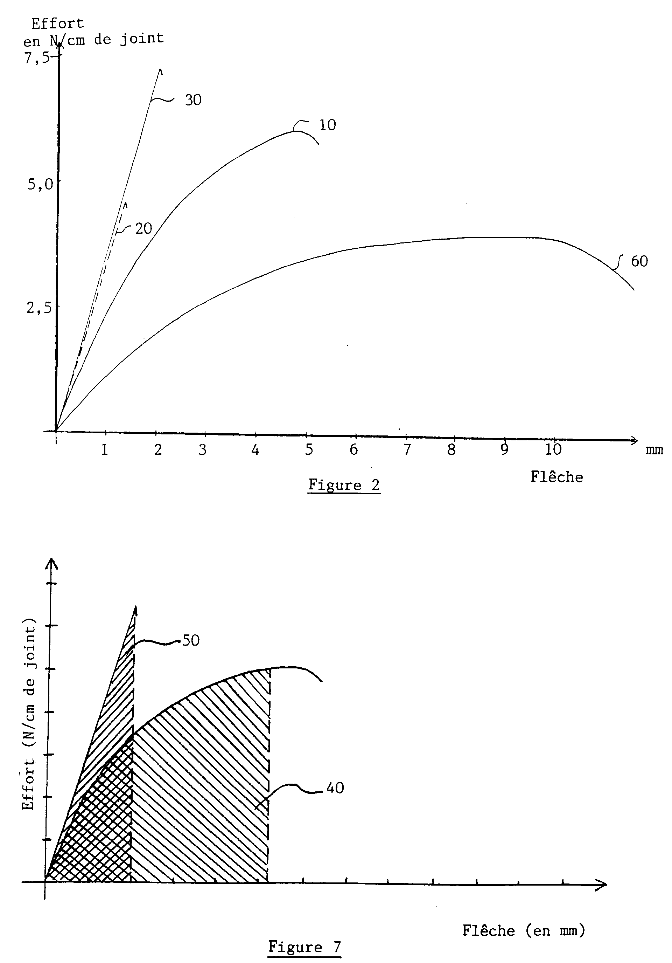

Ces résultats s'expliquent aisément à l'examen de la figure 7, reprenant les mêmes conditions opératoires que celles employées pour réaliser la figure 2. Les aires hachurées sont représentatives des énergies de rupture de chacun des systèmes de joint, l'aire (40) correspondant à un joint avec bande et l'aire (50) correspondant à un joint sans bande et avec jeu.

Face à ce problème non résolu du couple effort/déformation insatisfaisant des joints sans bande, l'art antérieur a proposé différents artifices pour diminuer la raideur des joints sans bande. Mais ils induisent à leur tours des inconvénients.

Selon la demande de brevet DE-A-3712382, un joint de plus grande élasticité est réalisé avec deux enduits différents, un premier enduit à base de plâtre semi-hydrate sur lequel on applique un second enduit à base d'une matière synthétique élastique, qui est constituée d'un homo-, co-ou terpolymère d'acétate de vinyle, de propionate de vinyle ou d'éthylène en poudre redispersable.

Dans les conditions expérimentales des essais de flexion décrits ci-dessus pour la demande de brevet européen 303071, on obtient une déformation à rupture qui peut atteindre 3,4 mm sous l'action d'une force de 18 N par cm de joint. Ce joint a pour principaux inconvénients d'être à la fois difficile à mettre en oeuvre et à prise lente. D'une part, il exige deux enduits différents qui doivent être associés dans des proportions respectives données sinon le joint risque d'être trop raide ; un savoir-faire spécifique est donc exigé pour remplir partiellement les joints avec le premier enduit. D'autre part, le second enduit à base d'une matière synthétique élastique durcit par un séchage plus ou moins long selon les conditions atmosphériques et risque de générer des retraits suffisamment visibles pour nécessiter une troisième passe de remplissage qui ne peut être effectuée au plus tôt que 24 heures après l'application du second enduit.

Pour les ouvrages sur ossatures, un autre artifice proposé par l'art antérieur consiste à surdimensionner ou à renforcer les éléments de cette ossature sur lesquels sont fixées les plaques de plâtre, ce qui a pour effet de rigidifier l'ensemble de l'ouvrage. Par conséquent, sous l'effet d'une contrainte donnée, les déformations de la cloison sont minimisées et en particulier, les joints devenant moins sollicités, leur risque de fissuration est également minimisé. Cet artifice entraîne plusieurs inconvénients : d'une part les ossatures renforcées qui sortent des standards habituels des ouvrages en plaque de plâtre compliquent les approvisionnements et l'organisation des chantiers et d'autre part les coûts de ces fournitures spéciales sont sensiblement plus élevés.

Ce qui précède montre donc les limites des systèmes actuels de traitement des joints sans bande et met en évidence qu'il n'existe pas sur le marché d'enduit sans bande apportant à la fois les qualités de comportement mécanique des joints à bande, associées à la facilité de mise en oeuvre des joints sans bande tout en préservant les habitudes d'approvisionnement et de mise en oeuvre des plaques de plâtre et de leurs ossatures.

Un but principal de la présente invention est de proposer un enduit pour la réalisation d'un joint sans bande qui présente sans artifice particulier (jeu, ossature renforcée, etc.) des caractéristiques mécaniques en terme de couple effort/déformation, du même ordre de grandeur que celles du joint renforcé par une bande, ce joint étant réalisé sur des bords mixtes (arrondis-amincis) de telle sorte que les plaques, leur dispositif de support, tel que les ossatures par exemple, et leur mode de mise en oeuvre restent rigoureusement identiques à ceux des systèmes de joints avec bande.

Un autre but de l'invention est un enduit pour la réalisation d'un joint sans bande qui présente, sans artifice particulier, une bonne tenue aux chocs et une résistance à la fatigue élevée.

Un autre but de l'invention est de proposer un enduit pour la réalisation d'un joint sans bande qui présente, sans artifice particulier, des caractéristiques mécaniques en terme de couple effort/déformation sensiblement équivalentes, qu'il soit mis en oeuvre sur bords mixtes amincis-arrondis, sur bouts biseautés ou sur bords ronds.

Un autre but de l'invention est un enduit pour la réalisation d'un joint sans bande qui soit simple de préparation et de mise en oeuvre, d'une qualité de pâte agréable à l'emploi, avec une cinétique de durcissement suffisamment rapide pour que l'application de la seconde passe de remplissage puisse se faire dans la journée, et qui soit en outre économique.

Un autre but de l'invention est un enduit pour la réalisation d'un joint sans bande dont le retrait est faible, ne nécessitant qu'une seconde passe de remplissage pour être invisible dans la cloison une fois posé.

Un autre but de l'invention est la pérennité des qualités précitées d'un enduit pour joint sans bande.

Conformément à l'invention, pour atteindre ces buts, on prévoit un enduit pour le remplissage des joints formés par les bords latéraux et contigus de deux plaques de plâtre et la formation d'un joint sans bande, caractérisé en ce que l'enduit comprend en pourcentage calculé par rapport à la totalité des matières sèches :

– 5 % à 30 % de plâtre semi-hydrate,

– 7 % à 25 % de polymère en suspension dans une phase aqueuse et/ou en poudre redispersable,

– si nécessaire, d'autres additifs pour le réglage du temps de prise et/ou le réglage de la qualité de la pâte et/ou l'adhérence de l'enduit

– et au moins une charge inerte en quantité complémentaire à 100 %.

De façon surprenante, grâce aux effets liants combinés du polymère et du plâtre, on a trouvé un enduit dont la teneur en plâtre a pu être abaissée à des valeurs jamais atteintes jusqu'à présent, avec des résistances mécaniques finales du produit sec suffisantes pour notre application, compte-tenu des déformabilités atteintes. En outre, le joint résultant de l'enduit selon l'invention possède avantageusement deux propriétés en apparence incompatibles, à savoir la souplesse suffisante pour supporter des déformations importantes sans fissuration ainsi que des résistances mécaniques lui conférant une bonne dureté de surface, la tenue aux chocs et sa pérennité.

De façon surprenante aussi, malgré un taux de plâtre faible, la cinétique de durcissement de l'enduit selon l'invention est suffisamment rapide pour permettre l'application du joint dans la journée.

De façon surprenante également, la solution selon l'invention permet d'atteindre les différents autres buts précités.

Le gâchage, la maniabilité et la pose de l'enduit selon l'invention sont aisés.

Le durcissement initial de l'enduit selon l'invention est assuré par la prise du plâtre et dans un laps de temps relativement court pour permettre l'application de la deuxième passe de remplissage dans la journée. De préférence, le temps d'emploi de l'enduit est de 1 heure 30, la deuxième passe pouvant intervenir au bout de 3 heures. Avantageusement, on choisit du plâtre (semi-hydrate) alpha qui, pour une quantité de polymère fixée, donne le meilleur compromis cinétique de durcissement/résistances finales/déformabilité.

Les joints réalisés selon l'invention, une fois posés, durcis et séchés, ont des caractéristiques mécaniques équivalentes à celles des joints à bande, en particulier des résistances maximales du même ordre de grandeur et des déformations à rupture supérieures, voire largement supérieures. La déformabilité atteinte est, sans conteste, beaucoup plus forte que celle de tous les autres joints sans bande de l'art antérieur.

On notera que les performances mécaniques du joint selon l'invention ont été obtenues, dans le cas de plaques jointives (donc en l'absence de jeu entre les bords contigus des plaques) et sont tout à fait équivalentes à celles des joints avec bande dans la même configuration, ce dernier système de pose constituant notre référence pour avoir fait ses preuves sur les très nombreux chantiers traités depuis l'origine des ouvrages en plaques de parement en plâtre.

En conséquence, un avantage important de l'invention est de permettre la pose des plaques de plâtre de façon traditionnelle, alors que les joints sans bande de l'art antérieur exigeaient l'augmentation de la raideur des cloisons pour limiter les déformations au niveau des joints, à l'aide de jeux entre plaques et/ou de renfort des ossatures métalliques pour assurer leur inertie et/ou d'autres moyens.

Un autre avantage important de l'invention réside dans le fait que l'enduit convient pour le remplissage des joints formés par les bords contigus et de géométrie variée des plaques de plâtre, et en particulier les bords amincis, arrondis ou arrondis et amincis.

Un autre avantage réside dans le fait que, grâce à ses qualités d'adhérence sur le papier et sur le plâtre et également ses qualités de souplesse et de résistance, l'enduit selon l'invention convient en outre au jointoiement des joints formés par les bords contigus des plaques de plâtre laissant apparaître le plâtre, tels que les bords biseautés.

En outre, grâce au faible retrait qu'il occasionne, le joint réalisé avec l'enduit selon l'invention n'est pas visible dans la cloison une fois posé. Ainsi, deux passes de remplissage successives, effectuées dans la journée, avec durcissement intermédiaire, suffisent pour obtenir une bonne finition, quelle que soit la géométrie des bords.

Un autre avantage réside dans le fait que la souplesse du joint réalisé avec l'enduit selon l'invention ne se fait pas au détriment de la dureté superficielle du joint qui est, après durcissement complet, au moins égale à celle de la plaque de plâtre.

Comme précité, on utilise de préférence du plâtre semi-hydrate alpha ou d'autres types de plâtre semi-hydrate tels que le plâtre semi-hydrate bêta. La dose de plâtre est comprise entre 5 % et 30 % : un minimum de 5 % est requis pour assurer le début de durcissement de l'enduit afin de réaliser ensuite la deuxième passe dans la journée. Au-delà de 30 %, la dose de polymère requise pour assouplir le plâtre dans le joint devient considérablement élevée pour pouvoir atteindre les caractéristiques mécaniques souhaitées pour ce joint. Dans ce domaine, la quantité de polymère doit toujours être ajustée à la dose de plâtre (qui amène de la raideur) pour obtenir, dans tous les cas de figure, des performances mécaniques équivalentes à celles des joints avec bande. Les meilleurs résultats ont été obtenus avec du plâtre alpha.

Comme polymère en suspension dans une phase aqueuse ou polymère en poudre redispersable, qui joue aussi le rôle de liant principal du joint selon l'invention, on choisit des polymères à plastification interne, c'est-à-dire des polymères dont les caractéristiques mécaniques dépendent de la nature chimique même de la molécule et ne sont pas dues à l'addition d'un agent plastifiant externe dont l'effet s'estomperait au cours du temps et conduirait à une évolution des caractéristiques mécaniques du joint dans le sens d'une perte de déformabilité. Ceci est une condition nécessaire pour assurer la pérennité des performances du joint selon l'invention.

Conformément à un mode de réalisation préférée de l'invention, on choisit les copolymères d'esters vinyliques et de monomères éthyléniques et de préférence les copolymères d'acétate de vinyle et d'éthylène. Le polymère vinylique peut être utilisé sous la forme d'une poudre redispersable ou sous la forme d'une dispersion aqueuse. De préférence, on choisit une dispersion aqueuse d'un copolymère d'acétate de vinyle et d'éthylène. De préférence également, on choisit les polymères vinyliques stabilisés à l'alcool polyvinylique. De préférence encore, on choisit une dispersion aqueuse d'un copolymère d'acétate de vinyle et d'éthylène stabilisé à l'alcool polyvinylique, avec laquelle les meilleures performances ont été obtenues. Cette préférence pour les familles précitées est surtout liée à la qualité de pâte qui résulte de ce choix. Néanmoins, d'autres émulsions de polymères conviennent aussi très bien à l'invention : des copolymères styrène-acrylique, des polymères à base de chlorure de vinyle, ou de l'ester vinylique de l'acide versatique ou d'un ester de l'acide acrylique, etc, stabilisés soit avec des dérivés cellulosiques, soit avec des combinaisons d'agents tensio-actifs, anioniques ou non-ioniques. Le choix est lié essentiellement à l'adéquation des caractéristiques mécaniques du polymère avec celles du plâtre. Les doses de polymères préconisées, de 7 % à 25 %, dépendent de la quantité de plâtre dans la formule, du niveau de performances souhaité pour le joint et des contraintes économiques.

Les charges inertes que l'on peut utiliser dans la présente invention sont des matières minérales finement divisées, essentiellement insolubles ou peu solubles dans l'eau. La charge préférée est le carbonate de calcium. De préférence encore, on choisit une poudre de carbonate de calcium dans laquelle les particules sont toutes de dimension inférieure à 125 microns, la seule raison étant le risque de rayures lors de l'application pelliculaire de l'enduit. Avantageusement, la dimension moyenne des particules de carbonate de calcium est de l'ordre de 30 microns. Cependant, on peut utiliser d'autres charges, seules ou en combinaison avec le carbonate de calcium, telles que l'hydroxyde de magnésium, la silice, etc.

Avantageusement, l'enduit selon l'invention comprend en outre des additifs pour le réglage du temps de prise et/ou le réglage de la qualité de la pâte et/ou l'adhérence de l'enduit.

Ainsi, on emploie avantageusement au moins un agent rétenteur d'eau aussi bien pour la qualité de la pâte que pour éviter un séchage trop rapide de l'enduit dans des conditions de pose particulières, notamment lorsque la température est élevée.

Comme agent rétenteur d'eau, on utilise de préférence un éther de cellulose tel que la méthyl cellulose (MC), la carboxyméthylcellulose (CMC), la méthyl hydroxy propyl cellulose (MHPC) ou la méthyl hydroxy éthyl cellulose (MHEC), etc. ou des combinaisons de ces différents agents car on bénéficie aussi de leur action viscosifiante et donc de leur impact sur la qualité de pâte. D'autre part, les caractéristiques de faible retrait et de non fissuration de l'enduit résultent de ce choix.

Eventuellement, les éthers de cellulose peuvent être substitués partiellement ou encore accompagnés de dérivés de polycarbohydrates d'origine naturelle participant à la rhéologie de la pâte tels que les galactomananes, les polysaccharides, le xanthane, etc. Les éthers de cellulose dits "modifiés" disponibles dans le commerce sont souvent des molécules précitées avec d'autres agents mouillants ou épaississants : ils peuvent tout à fait convenir à l'invention. Cependant, on peut utiliser d'autres agents rétenteurs d'eau ou viscosifiants tels que les éthers d'amidon ou des agents qui, en plus de leur fonction principale, présentent une action rétentrice d'eau suffisante, tels que l'alcool polyvinylique. L'alcool polyvinylique contenu parfois dans l'émulsion aqueuse du polymère comme stabilisant peut suffire pour assurer la rétention d'eau recherchée. La quantité d'agent rétenteur d'eau à introduire est fonction des différents composants du joint, en particulier le polymère vinylique et son système stabilisateur et des caractéristiques d'emploi souhaitées. D'une manière générale, l'agent rétenteur d'eau est avantageusement utilisé à raison de 0,05 ‰ à 5 ‰ en poids par rapport au poids total de matières sèches contenues dans l'enduit.

Pour régler la prise de l'enduit selon l'invention, on peut ajouter un couple d'agents retardateurs et accélérateurs de la prise du plâtre. Parmi les accélérateurs de prise pouvant convenir à l'invention, on peut citer les sulfates. De préférence, on utilise le gypse sous la forme d'un mélange pulvérulent de gypse et d'amidon, le gypse conservant toujours le même pouvoir d'accélération de la prise du plâtre grâce à l'amidon qui le préserve du vieillissement. Ainsi on rend la prise de l'enduit insensible aux pollutions extérieures de gypse, notamment celles qui peuvent être présentes sous la forme de germes de prise dans l'auge du plâtrier ou de l'applicateur. Parmi les agents retardateurs de prise, on peut citer les agents à la kératine dégradée par hydrolyse, les sels hydroxycarboxyliques et le monophosphate de calcium dans des proportions qui sont variables selon les proportions de plâtre semi-hydraté et d'accélérateur. Avantageusement, les proportions d'accélérateur et de retardateur sont ajustées de telle sorte que le temps de durcissement soit suffisamment court pour permettre la pose du joint dans la journée.

Conformément à un mode de réalisation préféré, pour l'obtention de performances optimales à tous les points de vue, l'enduit selon l'invention comprend en outre au moins un agent fluidifiant et/ou au moins un agent floculant et/ou au moins un agent mouillant et/ou au moins un agent adhésif.

Comme agent fluidifiant convenant à l'invention, on peut citer les polymères sulfonés, de préférence des agents à base de mélamine formaldéhyde sulfonée. Grâce à l'agent fluidifiant, on améliore la qualité de pâte et par conséquent sa travaillabilité. Ceci est particulièrement vrai dans le cas de copolymères d'acétate de vinyle et d'éthylène qui conduisent parfois à un raidissement de pâte dans le temps, problème qui peut être résolu par la présence de cet ajout. En outre, la présence de cet agent fluidifiant permet de diminuer les quantités d'eau nécessaires à la préparation de la pâte, ce qui contribue à l'amélioration de la cinétique de durcissement initial ainsi que des résistances et de la déformabilité du joint réalisé avec l'enduit selon l'invention. La teneur en agent fluidifiant peut être comprise entre 0 % et 0,5 % et de préférence entre 0,1 % et 0,25 % par rapport à la quantité totale de matières sèches constituant l'enduit.

L'alcool polyvinylique est un agent adhésif qui exerce aussi une action fluidifiante lorsqu'il entre dans la composition de l'enduit selon l'invention. En présence de polymères vinyliques, son addition est rarement nécessaire car le milieu est déjà riche en adhésifs de cette nature, mais elle peut le devenir en présence d'autres polymères plus particulièrement ceux stabilisés avec des dérivés cellulosiques ou d'autres tensio-actifs, l'intérêt de cet ajout étant l'amélioration d'une part de la qualité de pâte, d'autre part des adhérences sur bords biseautés en plâtre. La teneur en agent collant peut être comprise entre 0 % et 2 %, de préférence entre 0,5 % et 1 % par rapport à la quantité totale de matières sèches constituant l'enduit.

Comme agent floculant convenant à la présente invention, on peut citer les polyacrylamides. De préférence, on utilise les polyacrylamides dans des proportions comprises entre 0 ‰ et 0,3 ‰ en poids rapporté au poids total de matières sèches. Grâce à l'agent floculant, on obtient une pâte onctueuse très agréable d'emploi, ne collant pas à l'outil. Le joint se caractérise par un retrait moindre et des résistances mécaniques encore améliorées. Enfin, l'action de cet agent peut être renforcée en présence d'argiles (attapulgites, montmorillonites, bentonites, ...), charges pouvant aussi entrer dans la composition de l'enduit selon l'invention.

L'utilisation d'un agent mouillant-entraîneur d'air permet à la fois un meilleur mouillage du support, donc de meilleures adhérences de l'enduit sur tous types de support, mais aussi par le micro bullage qui peut se créer dans la pâte au moment du gâchage, une très bonne tenue de la pâte accompagnée d'excellentes qualités d'emploi se traduisant aussi par un retrait minimisé.

L'agent mouillant convenant à l'invention peut être un sulfate d'alkyle ou un sulfonate d'alkylaryle ou un dérivé phosphaté. De préférence, on utilise le laurylsulfate de sodium dans une teneur qui peut être comprise entre 0 ‰ et 0,5 ‰ et de préférence de l'ordre de 0,25 ‰ en poids rapporté au poids total de matières sèches.

La combinaison constituée d'au moins un agent rétenteur d'eau et d'agents fluidifiant, adhésif, floculant et/ou mouillant confère à l'enduit des propriétés remarquables qui sont d'importance aussi bien pour la préparation de la pâte que pour les performances des joints. Cette combinaison doit être adaptée en fonction du polymère utilisé et de son système stabilisateur. Dans certains cas, l'agent rétenteur d'eau utilisé seul sera suffisant. Dans d'autres cas il sera nécessaire d'utiliser une combinaison de cet agent rétenteur d'eau associé à un ou plusieurs différents agents choisis parmi les agents fluidifiant, floculant, adhésif et/ou mouillant. Ces différents agents, utilisés seuls ou selon les combinaisons précitées, contribuent avantageusement à la qualité de la pâte et à sa travaillabilité. Egalement ils permettent de diminuer la quantité d'eau nécessaire à la préparation d'une pâte homogène et facile à travailler. En conséquence, ils permettent d'améliorer les résistances des joints et leur déformation à la rupture. Notons également que le retrait est suffisamment faible pour que le joint soit invisible avec deux passes de remplissage.

Divers autres additifs peuvent être éventuellement ajoutés à l'enduit selon l'invention.

Ainsi, on peut ajouter au mélange servant à la préparation de l'enduit selon l'invention un agent capable de porter le pH du mélange à un pH basique. L'agent basique facilite la mise en solution de l'agent rétenteur d'eau, essentiellement quand il s'agit d'éther de cellulose et par voie de conséquence, favorise la prise de viscosité. Comme agent basique, on utilise un agent minéral, de préférence du ciment Portland "blanc", c'est-à-dire dépourvu d'oxyde de fer, ou de la chaux.

De préférence encore, on introduit dans le mélange la quantité d'agent basique nécessaire pour atteindre un pH supérieur ou égal à 8.

Eventuellement encore, on ajoute au mélange servant à la préparation de l'enduit selon l'invention du mica de l'ordre de 0 % à 5 % en poids par rapport au mélange total sec. Le mica favorise la glisse de la spatule lors du jointoiement et contribue à l'obtention de faible retrait. Grâce à sa morphologie lamellaire, il peut aussi contribuer efficacement à la déformabilité du joint.

Le mélange servant à la préparation de l'enduit selon l'invention peut également contenir des fibres de renfort telles que des fibres cellulosiques, de verre, ou synthétiques, c'est-à-dire par exemple des fibres polyacryliques, polyéthylènes, à base d'alcool polyvinylique, etc., ceci afin d'augmenter encore les résistances ainsi que la capacité de déformation du joint avant le début de fissuration.

Dès l'hydratation du plâtre, on notera que les proportions des différents constituants pouvant entrer dans la composition de l'enduit selon l'invention, une fois pris, ne sont plus les mêmes que celles précitées.

Avant utilisation, les ingrédients formant l'enduit selon l'invention peuvent être conservés sous la forme d'un composant unique, pulvérulent, lorsque le polymère et les différents ingrédients constitutifs de l'enduit sont en poudre. L'enduit doit alors être gâché avec la quantité d'eau permettant d'obtenir la consistance d'emploi adaptée à la réalisation du joint.

Egalement, l'enduit peut se présenter sous la forme de deux composants conservés séparément : un premier en poudre comprenant le plâtre et tout ou partie des autres ingrédients à l'état pulvérulent ; le deuxième constitué du polymère en milieu aqueux, des ingrédients liquides, des ingrédients solides non contenus dans le premier composant et éventuellement de la quantité d'eau nécessaire au gâchage. Avantageusement, ce deuxième composant très liquide ou pâteux comprend la quantité d'eau exacte permettant, par simple mélange de quantités déterminées de ces deux composants, d'obtenir la consistance souhaitée pour la réalisation du joint et lui conférant l'ensemble des qualités recherchées.

Pour chacune des formulations conformes à l'invention, la quantité d'eau nécessaire à l'obtention d'une pâte aisément travaillable est faible : le rapport en poids d'eau sur la quantité totale de solides est, dans la plupart des cas, inférieure à 0,32. A la fin de ce mélange, on obtient une pâte qui doit présenter une consistance d'emploi, être homogène et aisément travaillable et posséder des qualités de glisse suffisantes pour être facilement posée : les enduits selon l'invention possèdent l'ensemble des qualités précitées.

Par ailleurs, si l'invention a été mise au point spécialement pour la réalisation des joints entre les plaques de plâtre, elle ne se limite pas à cette seule application. En effet, grâce à ses qualités, l'enduit selon l'invention pourra avantageusement être utilisé pour réaliser des joints entre des panneaux situés dans le même plan ou dans deux plans différents formant un angle saillant ou rentrant, lesdits panneaux étant :

– soit constitués de plâtre, chargés ou non de fibres et enrobés ou non d'un revêtement minéral ou organique. A titre d'exemple, on peut citer les plaques enrobées de carton ; les plaques en plâtre pur telles que les carreaux de plâtre, les panneaux de staff (i.e. en plâtre chargé de fibres), les plaques enrobées d'un film plastique décoratif;

– soit constitués d'autres matériaux utilisés dans les ouvrages de second oeuvre du bâtiment, notamment le béton, le béton léger (par exemple à l'aide de billes de polystyrène), le béton cellulaire, la terre cuite, l'amiante ciment, les fibragglos (i.e. en matériaux à base de fibres de bois ou contenant de la paille) et d'autres panneaux industriels à base de bois (tels que les panneaux de particules).

L'invention et ses avantages seront mieux compris dans la description détaillée de plusieurs modes de réalisation particuliers donnés à titre d'exemples.

Les différents enduits à joints exemplifiés ont été soumis aux tests suivants et évalués dans les conditions opératoires suivantes, sauf indication contraire.

**Essai A :** Conditions opératoires de mesure de la résistance à la flexion et la déformation à rupture employées dans les exemples (sauf l'exemple 2)

Cet essai consiste à assembler deux échantillons de plaques de plâtre d'épaisseur 12,5 mm et de dimensions 20 cm x 40 cm, de sorte à former une plaque de 40 cm x 40 cm, en mettant en contact les bords des plaques à tester. Les plaques de parement de plâtre choisies pour préparer les échantillons ont des résistances en flexion correspondant à la norme AFNOR NF P 72302.

La géométrie des bords des plaques testées sera, dans la suite de la description, identifiée de la manière suivante :

. BR signifiera Bord Rond,
. BB signifiera Bord Biseauté,
. BA signifiera Bord Aminci,
. BRA signifiera Bord Rond et Aminci.

On notera que les BR, BA, et les BRA sont recouverts de carton, tandis que les BB laissent voir le plâtre du coeur des plaques. On notera également que l'assemblage des deux échantillons de plaques est effectué sans jeu ou cale intermédiaire.

On réalise le jointoiement en deux passes de remplissage successives avec un durcissement intermédiaire : le niveau de dureté requis pour effectuer la seconde passe de remplissage doit être au moins de 45 Shore A (conformément à la méthode de mesure décrite dans la norme AFNOR NF ISO 868 de Septembre 1986).

Les maquettes obtenues sont testées après un conditionnement de 7 jours à 23°C +/- 0,5°C et 50 % d'humidité relative.

Les maquettes sont disposées, joint vers le bas, sur deux appuis distants de 350 mm, la charge étant appliquée dans l'axe du joint et à l'opposé de celui-ci.

Les essais sont réalisés à vitesse de déformation imposée inférieure à 4 mm/min. Grâce à ces vitesses, on est plus représentatif des déformations lentes qui peuvent apparaître dans un bâtiment.

On enregistre la courbe charge/flèche et on note la flèche à laquelle apparaît la première fissure : en effet, c'est cette fissure qui permettra d'apprécier la qualité du joint, car c'est ce qui est repéré par l'utilisateur et fait perdre au joint sa fonction esthétique. Dans le cas de l'enduit selon l'invention, celle-ci peut apparaître avant ou après la charge maximale supportée par le joint. Dans le tableau et les courbes jointes, les performances de l'enduit associé à une bande seront aussi évaluées à partir des résultats charge/flèche correspondant à l'apparition de la première fissure

D'autre part, c'est l'apparition de la première fissure qui permettra d'apprécier la qualité du joint car c'est ce qui sera repéré rapidement par l'utilisateur ; en conséquence, dans le tableau et les courbes jointes, les performances de l'enduit associé à une bande seront évaluées à partir des résultats charge/flèche correspondant à l'apparition de la première fissure.

**Essai B :** Conditions opératoires de mesure de la résistance à la flexion et la déformation à rupture employées dans l'exemple 2

Cet essai est en tout point identique à l'essai A précité, les seules différences étant la portée entre les appuis qui est ramenée à 200 mm et la largeur de la plaque, résultant de l'assemblage de deux échantillons de plaques, qui est de 30 cm.

## EXEMPLE 1 (COMPARATIF)

Cet exemple a pour objet des joints avec armature. L'armature utilisée dans l'exemple 1 est identifiée dans le tableau (Ia) suivant :

| Désignation commerciale | Armature | Identification |
|---|---|---|
| Bande papier commercialisée sous la dénomination SOROPA | Bande papier de résistance en traction dans le sens de la largeur égale à environ 15 MPa pour un allongement à la rupture de l'ordre de 3 % | P1 |

L'enduit utilisé dans l'exemple 1 est indentifié dans le tableau (Ib) suivant :

| Enduit | Identification | Composition |
|---|---|---|
| Enduit commercialisé sous la dénomination PREGYLYS 45 | E1 | Enduit à base de 45 % de plâtre environ, de carbonate de calcium, d'un liant organique à hauteur de 2 % environ et de divers adjuvants |

On prépare conformément à la pratique bien connue dans ce domaine, un joint à bande en utilisant l'enduit et l'armature précités.

Puis, dans les conditions de l'essai A de résistance en flexion et déformation à la rupture précitées, le joint préparé est évalué. Les résultats de cet essai sont donnés dans le tableau (Ic) suivant :

| Joint testé | Charge à la première fissure (N) | Flèche lors de la première fissure (mm) | Charge maximale tolérée (N) | Flèche à rupture (mm) |
|---|---|---|---|---|
| Enduit E1 Armature P1 Bords BA | 220 (5,5 N/cm de joint) | 5,0 | 220 (5,5 N/cm de joint) | 5,0 |

## EXEMPLE 2 (COMPARATIF)

Cet exemple a pour objet des joints sans bande et sans jeu réalisé entre des bords de plaques de configuration BRA à l'aide d'enduits connus de l'état de l'art et leur comparaison avec des joints à bande. les enduits testés dans l'exemple 2 sont décrits et identifiés dans le tableau (IIa) ci-après :

| Identification | Composition |
|---|---|
| E2a | Composition conforme à la composition revendiquée dans le brevet européen 227 876 et comprenant 85 % pondéral de plâtre alpha |
| E2b | Composition identifié dans le brevet européen 303 071 et résultats repris de ce brevet |

On a préparé avec l'enduit (E2a), conformément à la pratique bien connue dans ce domaine, un joint sans bande entre deux plaques de plâtre.

Le joint obtenu, une fois durci et séché, est évalué dans les conditions de l'essai B.

Les résultats de ces essais sont donnés dans le tableau (IIb) suivant :

| | Charge à la première fissure (N/cm de joint) | Flèche lors de la première fissure (mm) | Charge maximale tolérée (N/cm de joint) | Flèche à charge maximale (mm) |
|---|---|---|---|---|
| Enduit E2b | - | - | 13 (1) | 1,5 |
| Enduit E2a | 7,6 | 0,75 | 7,6 (2) | 0,75 |
| Joint à bande décrit dans l'Exemple 1 : E1 P1 | 7,7 | 2,0 | 8,8 | 3,2 |

(1) : la raideur du système réalisé avec l'enduit (E2b) reste supérieure à celle du joint sans bande même si la résistance à la rupture est plus forte puisque la rupture a lieu à 1,5 mm de déformation, alors que la première fissure intervient pour 2 mm de flèche à la surface d'un enduit (E1) associé à une bande de renfort (p1). Par ailleurs, la nécessité d'incorporer plus de 10 % de polymère en poudre redispersable avec une quantité élevée de microbilles de verre entraîne un prix de revient de formule tellement élevé que ce produit ne peut être compétitif avec les produits traditionnels, d'où les limites économiques de l'enduit selon le brevet européen n°0303 071.

(2) : on remarque la faible charge à la rupture due au délaminage du carton qui intervient assez tôt avec cette géométrie de bord arrondi-aminci ; l'enduit sans bande de ce type est généralement proposé avec des bords avec une géométrie en quart de cercle.

**EXEMPLE 3**

Cet exemple a pour objet un joint sans bande et sans jeu réalisé entre des bords de plaques de configuration BRA à l'aide d'un enduit conforme à l'invention.

L'enduit (E3) testé dans l'exemple 3 est composé de (en parties en poids) :

| | |
|---|---|
| - plâtre alpha | : 156 |
| - calcaire | : 723,95 |
| - mica | : 8,7 |
| - polyacrylamide | : 0,045 |
| - méthylhydroxyéthylcellulose | |
| (Viscosité Brookfield RVT 20 tr/min, à | |
| 23°C d'une solution à 2 % : 40 000 mPa.s | : 0,35 |
| - ciment Portland blanc | : 0,175 |
| - gypse additionné d'amidon (50/50) | : 1,65 |
| - kératine dégradée par hydrolyse (retardant) | : 0,13 |
| - mélamine formaldéhyde sulfonée | : 0,45 |
| - alcool polyvinylique | : 0,45 |
| - laurysulfate de sodium | : 0,10 |
| - polymère (Extrait Sec) | : 108 |
| (émulsion de copolymère d'éthylène et de vinylacétate | |
| stabilisé à l'alcool polyvinylique à 55 % d'extrait sec ; | |
| pH = 4,5 à 5,5 ; viscosité Brookfield 4/20 à 25°C de | |
| 5 poises à 30 poises ; taille des particules égale à 0,8 $\mu$m) | |
| - eau (pour 1 000 g de poudre ; y compris l'eau | |
| apportée par le polymère en émulsion) | : 250 |

Les joints sans bande ni jeu obtenus à l'aide de l'enduit (E3) ont été évalués en résistance en flexion et déformation à la rupture dans les conditions des essais A et B.

Les résultats de cette évaluation sont reportés dans le tableau III suivant :

| Caractéristiques mesurées | Test employé | |
| --- | --- | --- |
| | Essai A (entr'appuis de 350 mm) | Essai B (entr'appuis de 200 mm) |
| Charge à l'apparition de la première fissure (N/cm de joint) | 3,7 (148°N) | 6,6 (195 N) |
| Charge maximale tolérée (N/cm de joint) | 3,7 | 6,5 |
| Flèche lors de la première fissure (mm) | 10 | 5,5 |
| Flèche à charge maximale (mm) | 10 | 5,1 |

Si en se référant au tableau (IIb), on compare les résultats obtenus dans les conditions de l'essai B de l'enduit (E3) avec ceux découlant de l'emploi de l'enduit (E2b), on constate que la flèche à fissure de l'enduit (E3) selon l'invention est plus de quatre fois supérieure à celle du joint traité avec l'enduit (E2b) et près de trois fois supérieure à celle d'un enduit associé à une bande, pour une résistance maximale équivalente à 15 % près.

Le joint selon l'invention préparé avec l'enduit (E3) assure donc la meilleure continuité entre les plaques avec une déformabilité propre qui lui permet de supporter les chocs et les variations dimmensionnelles importantes que peuvent subir les plaques de plâtre elles-mêmes ou l'ensemble du bâtiment. Ce joint présente en outre le niveau de résistances minimal requis, ne serait-ce que pour avoir une dureté de surface au moins équivalente à celle de la plaque, compte-tenu de l'utilisation ultérieure de la cloison.

La caractérisation effort (en N/cm de joint)/déformation (en mm) par l'essai de flexion A de l'enduit selon l'invention réalisé avec l'enduit (E3) est reporté sur la figure 2. La courbe (60) montre l'allure du comportement de ce joint comparativement :

– au joint sans bande du type de celui décrit dans le brevet 227 876 (enduit E2a) correspondant à un essai sans cale (20) ou avec cale (30)

– et au joint avec bande (10).

La figure 2 met aussi clairement en évidence la grande déformabilité du joint selon l'invention et sa grande énergie de rupture quand il est soumis à une contrainte ainsi que les limites des systèmes sans bande existants.

Par ailleurs, cet exemple décrit une composition donnant les meilleures résultats, aussi bien en performances mécaiques du joint durci qu'au niveau de la qualité de pâte résultant de sa préparation.

## EXEMPLE 4 A 7

Les compositions des enduits testés sont reportées dans le tableau (IVa) suivant et les quantités sont données en parties en poids.

| Composition | Référence des exemples | | | |
|---|---|---|---|---|
| | 4 | 5 | 6 | 7 |
| Plâtre alpha (sauf dans l'exemple 5 où l'on utilise du plâtre bêta) | 156 | 153 | 54 | 234 |
| Calcaire | 732,96 | 707,8 | 832,96 | 589 |
| Mica | - | 8,7 | 9 | 8,3 |
| Polyacrylamide | - | 0,045 | 0,045 | 0,08 |
| Ether de cellulose (i) | 1,10 | 0,35 | 1,35 | 1,25 |
| Ciment Portland blanc | - | 0,175 | 0,18 | 0,17 |
| Gypse + amidon (50/50) | 1,8 | 1,65 | 1,8 | 1,8 |
| Kératine dégradée par hydrolyse | 0,14 | 0,25 | 0,09 | 0,19 |
| Mélamine formaldéhyde sulfonée | - | 0,45 | 1,35 | - |
| Alcool polyvinylique | - | 0,45 | - | - |
| Laurylsulfate de sodium | - | 0,09 | 0,225 | 0,21 |
| Polymère en émulsion (Extrait Sec) | 108(a) | 127(a) | 99(b) | 165(b) |
| | | | | |
| Eau (pour 1000 g de poudre ; y compris l'eau apportée par le polymère en émulsion) | 231 | 256 | 262 | 274 |

Références :

(a) : copolymère d'éthylène et vinylacétate stabilisé à l'alcool polyvinylique 55 % d'extrait sec; pH = 4,5 à 5,5 ; viscosité Brookfield 4/20 à 25°C variant de 5 poises à 30 poises; taille des particules 0,8 μm à 0,9 μm

(b) : copolymère d'éthylène et de vinylacétate stabilisé à l'alcool polyvinylique 55 % d'extrait sec ; pH = 4,5 à 5, 5 ; viscosité Brookfield 4/20 à 25°C variant de 15 poises à 40 poises; taille des particules 0,5 μm à 2 μm.

(i) : méthylhydroxyyéthylcellulose ; viscosité Brookfield RVT 20 tr/min à 23°C d'une solution à 2 % : 40 000 mPa.s

On obtient pour chacun de ces exemples, une pâte homogène, facile à travailler et à poser.

Les performances selon l'essai A des joints sans bande et sans jeu préparés avec ces enduits, pour différentes géométries de bords, sont données dans le tableau (IVb) ci-dessous :

| Joint préparé avec l'enduit E3 de l'exemple 3 | 4 | | | 5 | | | 6 | | | 7 | | |
|---|---|---|---|---|---|---|---|---|---|---|---|---|
| | BR | BRA | BB | BR | BRA | BB | BR | BRA | BB | BR | BRA | BB |
| Charge maximale (N) | - | 149 | 176 | - | 112 | 106 | - | 111 | 134 | 152 | 117 | 179 | 206 | 134 | 259 |
| Flèche à charge maximale (mm) | - | 10 | 7,2 | - | 13 | 10 | - | 10 | 9,0 | 26,5 | 19,5 | 18 | 16,5 | 14 | 3,8 |
| Flèche à fissure (mm) | - | 10 | 7,2 | - | 13 | 10 | - | 10 | 9,0 | 26,5 | 19,5 | 21,5 | 16,5 | 15,6 | 3,8 |
| Charge pour flèche à fissure (N) | - | 149 | 176 | - | 112 | 106 | - | 111 | 134 | 152 | 117 | 167 | 206 | 125 | 259 |
| Mode de rupture | Centre joint | | | Centre joint | | | BRA = centre joint BB = tendance au décollement | | | Centre joint | | | BRA = centre joint BB = rupture biseau | | |
| Dureté Shore | 45 Shore A à 2h 30 60 Shore A à 4h 00 80 Shore C à 7 jours | | | 45 Shore A à 4h 00 55 Shore A à 8h 00 75 Shore C à 7 jours | | | 30 Shore A à 2h 30 45 Shore A à 5h 00 75 chore C à 7 jours | | | 45 Shore A à 8h 00 75 Shore C à 7 jours | | | 45 Shore A à 5h 00 75 Shore C à 7 jours | | |

Toutefois, cette série de résultats met bien en évidence que :

– des performances très intéressantes sont obtenues avec une formule de composition assez simple (ex n°4) ;

– le plâtre bêta peut se substituer au plâtre alpha même si notre préférence va au semi-hydrate alpha qui donne de meilleures performances mécaniques ainsi qu'une cinétique de durcissement plus rapide (ex n°5) ;

– une cinétique de durcissement très satisfaisante peut être obtenue dans les 8 heures à 23°C avec un produit ne contenant que 5,4 % de plâtre alpha (ex n°6) ;

– un joint souple est aussi obtenu avec des quantités plus importantes de plâtre et de polymère (ex n°7).

## EXEMPLES 8 A 14

Les compositions des enduits testés sont reportés dans le tableau (Va) suivant et les quantités y sont données en parties en poids :

16

| Composition | Référence des exemples | | | | | | |
| --- | --- | --- | --- | --- | --- | --- | --- |
| | 8 | 9 | 10 | 11 | 12 | 13 | 14 |
| Plâtre alpha | 157,6 | 157,6 | 156 | 133,95 | 133,95 | 180,2 | 139,5 |
| Calcaire | 727 | 729,6 | 715,6 | 745 | 742,3 | 706,58 | 774,78 |
| Mica | 9,0 | 9,0 | 8,9 | 8,9 | 8,9 | 9 | 9,28 |
| Polyacrylamide | 0,045 | 0,045 | 0,09 | 0,045 | 0,045 | 0,045 | 0,045 |
| Ether de cellulose (i) | 0,54 | 1,13 | 0,36 | 1,34 | 1,34 | 1,35 | 1,39 |
| Ciment Portland blanc | 0,18 | 0,18 | 0,18 | 0,18 | 0,18 | 0,18 | 0,18 |
| Gypse + amidon (50/50) | 1,8 | 1,8 | 1,8 | 1,8 | 4,5 | 1,8 | 1,85 |
| Kératine dégradée par hydrolyse | 0,144 | 0,12 | 0,054 | 0,185 | 0,135 | 0,165 | 0,14 |
| Mélamine formaldéhyde sulfonée | - | 1,35 | - | 1,35 | 1,34 | 1,35 | 1,4 |
| Alcool polyvinylique | 4,5 | - | 8,9 | - | - | - | - |
| Laurylsulfate de sodium | 0,09 | 0,09 | 0,09 | 0,23 | 0,23 | 0,23 | 0,235 |
| Polymère en émulsion (Extrait Sec) | 99,1(c) | 99,1 (d) | 108 (e) | 107,1 (f) | - | 99,1 (b) | 71,4 (b) |
| Polymère en poudre redispersable | - | - | - | - | 107,1 (g) | - | - |
| Eau (pour 1000 g de poudre ; y compris l'eau apportée par le polymère en émulsion) | 243 | 234 | 250 | 250 | 267 | 276 | 291 |

Références :

(b) : copolymère d'éthylène et de vinylacétate stabilisé à l'alcool polyvinylique 55 % d'extrait sec; pH = 4,5 à 5,5 ; viscosité Brookfield 4/20 à 25°C variant de 15 poises à 40 poises ; taille des particules 0,5 μm à 2 μm.

(c) : copolymère d'acétate de vinyle, de l'ester vinylique de l'acide versatique et d'un ester de l'acide acrylique stabilisé avec des tensio-actifs et des composés à haut poids moléculaire 50 % d'extrait sec ; pH = 5 à 6 ; viscosité Contraves STV MS All à 23°C égale à 130 ± 80 mPa.s ; taille des particules égale à 0,15 μm.

(d) : copolymère d'acrylate et de styrène, émulsion exempte de plastifiant et stabilisée aux tensio-actifs anioniques ; 50 % d'extrait sec ; pH = 7,0 à 8,5 viscosité Contraves STV MS All à 23°C égale à 300 mPa.s à 1 000 mPa.s.

(e) : copolymère de chlorure de vinyle, d'éthylène et d'ester de vinyle stabilisée avec des tensio-actifs anioniques et non-ioniques ;

55 % d'extrait sec; pH = 8,0; viscosité Brookfield RVT 20 tr/min broche n°1 à 23°C égale 300 ± 150 mPa.s; taille des particules: environ 0,3 μm.

(f) : copolymère d'éthylène et d'acétate de vinyle stabilisé à l'alcool polyvinylique 60 % d'extrait sec; viscosité Brookfield RVT 20 tr/min broche n°3 à 23°C égale à environ 3 800 + /- mPa.s ; taille des particules : environ 0,9 μm.

(g) : copolymère d'acétate de vinyle et d'éthylène en poudre redispersable densité : 500 g/l à 600 g/l.

(i): méthylhydroxyéthylcellulose; viscosité Brookfield RVT 20 tr/min à 23°C d'une solution à 2 % : 40 000 mPa.s.

On obtient pour chacun de ces exemples, une pâte homogène, facile à travailler et à poser.

Les performances selon l'essai A des joints sans bande et sans jeu, préparés avec ces enduits, pour différentes géométries de bords sont données dans le tableau (Vb) ci-dessous.

| | 8 | | | 9 | | | 10 | | | 11 | | |
|---|---|---|---|---|---|---|---|---|---|---|---|---|
| | BR | BRA | BB | BR | BRA | BB | BR | BRA | BB | BR | BRA | BB |
| Charge maximale (N) | - | 164 | 172 | - | 130 | 121 | - | 167 | 173 | 176 | 157 | 300 |
| Flèche à charge maximale (mm) | - | 6,0 | 3,1 | - | 10 | 4,9 | - | 5,3 | 1,6 | 18,5 | 12,0 | 9,7 |
| Flèche à fissure (mm) | - | 6,0 | 3,1 | - | 10,5 | 4,9 | - | 5,3 | 1,6 | 17 | 12,0 | 9,7 |
| Charge pour flèche à fissure (N) | - | 164 | 172 | - | 125 | 121 | - | 167 | 173 | 168 | 157 | 300 |
| Mode de rupture | BRA = centre joint  BB = rupture biseau | | | BRA = centre joint  BB = tendance au décollement | | | BRA = centre joint  BB = rupture biseau | | | BRA = centre joint  BB = rupture biseau | | |
| Dureté Shore | 45 Shore A à 2h 00  65 Shore A à 4h 00  75 Shore C à 7 jours | | | 60 Shore A à 5h 00  85 Shore A à 8h 00  80 Shore C à 7 jours | | | 65 Shore A à 3h 00  80 Shore C à 7 jours | | | 75 Shore A à 4h 00  75 Shore C à 7 jours | | |

| | 12 | | | 13 | | | 14 | | |
|---|---|---|---|---|---|---|---|---|---|
| | BR | BRA | BB | BR | BRA | BB | BR | BRA | BB |
| Charge maximale (N) | 143 | 169 | 222 | 116 | 138 | 240 | 104 | 163 | 229 |
| Flèche à charge maximale (mm) | 7,0 | 5,4 | 4,5 | 10 | 8,6 | 6,5 | 6,5 | 5,5 | 4,5 |
| Flèche à fissure (mm) | 8,0 | 5,9 | 5,0 | 11,5 | 8,6 | 7,0 | 7,2 | 6,0 | 5,0 |
| Charge pour flèche à fissure (N) | 120 | 132 | 197 | 105 | 138 | 225 | 98 | 150 | 213 |
| Mode de rupture | Centre joint | | | Centre joint | | | Centre joint | | |
| Dureté Shore | 45 Shore A à 3h 30 60 Shore A à 6h 00 70 Shore C à 7 jours | | | 75 Shore A à 3h 00 85 Shore C à 7 jours | | | 75 Shore A à 4h 00 80 Shore C à 7 jours | | |

Les tableaux (IVa) et (Va) regroupent des exemples de compositions incorporant des polymères de différentes natures chimiques :
- terpolymère vinylacétate/éthylène/versatate (ex n°8)
- copolymère d'acrylate et de styrène (ex n°9)
- terpolymère de chlorure de vinyle, d'éthylène et d'ester de vinyle (ex n°10) tous stabilisés avec des composés différents de l'alcool polyvinylique.

Comme le montrent les résultats obtenus, ces émulsions aqueuses sont compatibles avec le plâtre et permettent de conférer au joint durci les résistances mécaniques souhaitées. Moyennant quelques ajustements au niveau de la formulation, la qualité de pâte est tout à fait satisfaisante et équivalente à celle des formules utilisant des polymères stabilisés à l'alcool polyvinylique. Toutefois, on remarquera que sur les bords biseautés en plâtre, la rupture de la maquette ne se fait pas par fissuration de l'enduit en son centre, mais par rupture du biseau de la plaque. Ce mode de rupture garantit la bonne adhérence du joint sur ce type de bord et montre que le point faible ici n'est pas le joint (dont l'élasticité est garantie par la valeur obtenue sur les autres types de bords BRA), mais le coeur de la plaque de plâtre. Les essais sur cloisons grandeur nature réalisés en plaque de parement en plâtre sur ossature tradionnelle ont montré la validité de ces formules et leur supériorité par rapport aux joints sans bande de l'art antérieur.

L'exemple 11 a été réalisé avec un autre type de polymère vinylique en émulsion et l'exemple 12 correspond à une composition contenant un polymère en poudre redispersable. Les résultats obtenus sont très satisfaisants et comparables à ceux du système à bande.

Enfin, les formules 13 et 14 réalisées soit avec un taux de plâtre plus élevé pour une même dose de polymère, soit avec une très faible dose de polymère (7,1 %), donnent des résultats particulièrement intéressants. On remarquera en particulier le faible coût matière de l'invention selon la formule 14.

## EXEMPLES 15 A 17

Les compositions des enduits testés sont reportés dans le tableau (VIa) ci-dessous et les quantités sont données en parties en poids :

| Composition | Référence des exemples | | |
|---|---|---|---|
| | 15 | 16 | 17 |
| Plâtre alpha | 194 | 133,5 | 156 |
| Calcaire | 669,3 | 743,2 | - |
| Mica | 15,6 | 8,9 | 9 |
| Polyacrylamide | 0,027 | 0,045 | 0,05 |
| Ether de cellulose | 0,67 (j) | 1,78 (k) | 0,9 (i) |
| Ciment Portland blanc | 0,045 | 0,36 | 0,18 |
| Gypse + amidon (50/50) | 1,12 | 1,8 | 1,8 |
| Kératine dégradée par hydrolyse | 0,125 | 0,18 | 0,16 |
| Mélamine formaldéhyde sulfonée | - | - | 1,35 |
| Alcool polyvinylique | 2,25 | - | - |
| Laurylsulfate de sodium | - | 0,22 | - |
| Polymère en émulsion (Extrait Sec) | 108 (a) | 110 (a) | 108 (a) |
| Polymère en poudre redispersable | 6,6 (h) | - | - |
| Argile | 2,25 | - | - |
| | | | |
| Eau (pour 1000 g de poudre ; y compris l'eau apportée par le polymère en émulsion) | 250 | 274 | 250 |

Références :

(a) : copolymère d'éthylène et vinylacétate stabilisé à l'alcool polyvinylique 55 % d'extrait sec; pH = 4,5 à 5,5; viscosité Brookfield 4/20 à 25°C variant de 5 poises à 30 poises; taille des particules 0,8 µm à 0,9 µm
(h) : copolymère d'acétate de vinyle et d'éthylène en poudre redispersable densité : 500 g/l à 600 g/l.
(i) : méthylhydroxyéthylcellulose ; viscosité Brookfield RVT à 20 tr/min à 23°C d'une solution à 2 % : 40 000 mPa.s.
(j) : méthylhydroxypropylcellulose; viscosité Brookfield RVT à 20 tr/min à 23°C d'une solution à 2 % : 20 000 mPa.s.
(k) : méthylcellulose ; viscosité Brookfield RVT à 20 tr/min à 23°C d'une solution à 2 % : 7 000 mPa.s.
On obtient pour chacun de ces exemples, une pâte homogène, facile à travailler et à poser. Les performances selon l'essai A des joints sans bande et sans jeu préparés avec ces compositions, pour différentes géométries de bord, sont données dans le tableau (VIb) ci-après.

|  | 15 | | | 16 | | | 17 | | |
|---|---|---|---|---|---|---|---|---|---|
|  | BR | BRA | BB | BR | BRA | BB | BR | BRA | BB |
| Charge maximale (N) | - | 136 | 136 | - | 130 | 144 | - | 130 | 150 |
| Flèche à charge maximale (mm) | - | 9,5 | 7,7 | - | 8,0 | 7,8 | - | 13,0 | 11,0 |
| Flèche à fissure (mm) | - | 9,7 | 7,7 | - | 8,0 | 8,2 | - | 15,0 | 11,2 |
| Charge pour flèche à fissure (N) | - | 130 | 136 | - | 130 | 135 | - | 120 | 145 |
| Mode de rupture | Centre joint | | | Centre joint | | | Centre joint | | |
| Dureté Shore | 60 Shore A à 3h 00 | | | 40 Shore A à 3h 30<br>50 Shore A à 5h 00 | | | 65 Shore A à 3h 00 | | |
|  | 80 Shore C à 7 jours | | | 80 Shore C à 7 jours | | | 80 Shore C à 7 jours | | |

Ces exemples 15 à 17 montrent que la qualité de pâte peut être facilement ajustée grâce au choix de la nature et de la dose d'incorporation des différents additifs (éther de cellulose, agents épaississants, fluidifiant, mouillant, ...), ceci sans affecter de façon négative les performances mécaniques des joints durcis.

**EXEMPLES 18 A 20**

Les compositions des enduits testés sont reportées dans le tableau (VIIa) ci-dessous et les quantités sont données en parties en poids :

| Composition | Référence des exemples | | |
|---|---|---|---|
| | 18 | 19 | 20 |
| Plâtre alpha | 137,6 | 135 | 135,1 |
| Calcaire | 748,27 | 749,46 | 747,21 |
| Mica | 9,2 | 9 | 9 |
| Polyacrylamide | 0,05 | 0,045 | 0,045 |
| Ether de cellulose (i) | 0,45 | 1,4 | 1,35 |
| Ciment Portland blanc | 0,18 | 0,18 | 0,18 |
| Gypse + amidon (50/50) | 0,92 | 1,8 | 1,8 |
| Kératine dégradée par hydrolyse | 0,23 | 0,13 | 0,315 |
| Mélamine formaldéhyde sulfonée | 2,3 | 1,4 | 1,35 |
| Alcool polyvinylique | - | - | - |
| Laurylsulfate de sodium | - | 0,23 | 0,23 |
| Polymère en émulsion (Extrait Sec) | 82,5 (f) | 99,1 (b) | 99,1 (b) |
| Fibres | 18,3 (l) | 2,25 (m) | 4,5 (n) |
| | | | |
| Eau (pour 1000 g de poudre ; y compris l'eau apportée par le polymère en émulsion) | 283 | 281 | 295 |

Références :

(b) : copolymère d'éthylène et de vinylacétate stabilisé à l'alcool polyvinylique 55 % d'extrait sec ; pH = 4,5 à 5,5 ; viscosité Brookfield 4/20 à 25°C variant de 15 poises à 40 poises ; taille des particules 0,5 μm à 2 μm.

(f) : copolymère d'éthylène et d'acétate de vinyle stabilisé à l'alcool polyvinylique 60 % d'extrait sec ; viscosité Brookfield RVT 20 tr/min broche n°3 à 23°C égale à environ 3 800 mPa.s.

(i) : méthylhydroxyéthylcellulose ; viscosité Brookfield RVT 20 tr/min à 23°C d'une solution à 2 % : 40 000 mPa.s.

(l) : fibres cellulosiques de diamètre égal à 18 μm et de longueur moyenne égale à 60 μm.

(m) : fibres acryliques de longueur moyenne égale à 0,5 mm.

(n) : fibres d'alcool polyvinylique de longueur moyenne égale à 3 mm.

On obtient pour chacun de ces exemples, une pâte homogène, facile à travailler et à poser.

Les performances selon l'essai A des joints sans bande et sans jeu préparés avec ces compositions, pour différentes granulométries de bord, sont données dans le tableau (VIIb) ci-dessous, en parties en poids :

22

| | 18 | | | 19 | | | 20 | | |
|---|---|---|---|---|---|---|---|---|---|
| | BR | BRA | BB | BR | BRA | BB | BR | BRA | BB |
| Charge maximale (N) | 133 | - | 128 | 133 | 152 | 186 | 160 | 130 | 264 |
| Flèche à charge maximale (mm) | 11 | - | 8 | 16,5 | 7,0 | 11,0 | 13,5 | 12 | 10 |
| Flèche à fissure (mm) | 10 | - | 6,5 | 16,5 | 9,4 | 12,0 | 13,5 | 15 | 11,4 |
| Charge pour flèche à fissure (N) | 130 | - | 125 | 133 | 130 | 175 | 160 | 120 | 230 |
| Mode de rupture | Centre joint | | | Centre joint | | | Centre joint | | |
| Dureté Shore | 45 Shore A à 4h 00 | | | 50 Shore A à3h 00 | | | 75 Shore A à 3h 00 | | |
| | 75 Shore C à 7 jours | | | 75 Shore C à 7 jours | | | 80 Shore C à 7 jours | | |

Les exemples montrent que l'on peut limiter l'apparition de fissures grâce à l'addition de fibres de tous types (cellulosiques, acryliques, d'alcool polyvinylique, de verre, etc.) pour augmenter encore les performances mécaniques du joint durci. A faible dose d'incorporation et pour des fibres courtes, la qualité de pâte des compositions 18 et 19 est tout à fait satisfaisante.

## Revendications

**1 -** Enduit pour le remplissage des joints formés par les bords latéraux et contigus de deux plaques de plâtre et la formation d'un joint sans bande, caractérisé en ce que l'enduit comprend en pourcentage en poids calculé par rapport à la totalité des matières sèches :
– 5 % à 30 % de plâtre semi-hydrate
– 7 % à 25 % de polymère en suspension dans une phase aqueuse et/ou en poudre redispersable
– si nécessaire, d'autres additifs pour le réglage du temps de prise et/ou le réglage de la qualité de la pâte et/ou l'adhérence de l'enduit
– et au moins une charge inerte en une quantité complémentaire à 100 %.

**2 -** Enduit selon la revendication 1, caractérisé en ce que l'on choisit le plâtre semi-hydrate alpha ou un mélange de plâtre semi-hydrate alpha et de plâtre semi-hydrate bêta.

**3 -** Enduit selon l'une des revendications 1 ou 2, caractérisé en ce que l'on choisit les copolymères d'esters vinyliques et de monomères éthyléniques.

**4 -** Enduit selon la revendication 3, caractérisé en ce que l'on choisit les copolymères d'acétate de vinyle et d'éthylène.

**5 -** Enduit selon la revendication 4, caractérisé en ce que l'on choisit une dispersion aqueuse d'un copolymère d'acétate de vinyle et d'éthylène.

**6 -** Enduit selon la revendication 4 ou 5, caractérisé en ce que l'on choisit un copolymère d'acétate de vinyle et d'éthylène stabilisé à l'alcool polyvinylique.

**7 -** Enduit selon les revendications 1 à 2, caractérisé en ce que l'on choisit des copolymères styrène-acryliques ou des polymères à base de chlorure de vinyle ou de l'ester vinylique de l'acide versatique ou d'un ester de l'acide acrylique.

**8 -** Enduit selon l'une des revendications 1 à 7, caractérisé en ce que la charge inerte est un carbonate de calcium.

**9 -** Enduit selon la revendication 8, caractérisé en ce que les particules de carbonate de calcium sont toutes de dimension inférieure à 125 µm.

**10 -** Enduit selon la revendication 9, caractérisé en ce que la dimension moyenne des particules de carbonate de calcium est de l'ordre de 30 µm.

**11 -** Enduit selon l'une des revendications 1 à 10, caractérisé en ce qu'il comprend des additifs pour le réglage du temps de prise et/ou le réglage de la qualité de la pâte et/ou l'adhérence de l'enduit.

**12 -** Enduit selon la revendication 11, caractérisé en ce qu'il comprend au moins un agent rétenteur d'eau.

**13 -** Enduit selon la revendication 12, caractérisé en ce que l'agent rétenteur d'eau est choisi parmi les éthers de cellulose.

**14 -** Enduit selon la revendication 12 ou 13, caractérisé en ce que l'agent rétenteur d'eau est utilisé à raison de 0,05 ‰ à 5 ‰ en poids par rapport au poids total de matière sèche.

**15 -** Enduit selon l'une des revendications 11 à 14, caractérisé en ce qu'il comprend également au moins un agent fluidifiant et/ou au moins un agent floculant et/ou au moins un agent mouillant et/ou au moins un agent adhésif.

**16 -** Enduit selon la revendication 15, caractérisé en ce que l'agent fluidifiant est à base de mélamine formaldéhyde sulfonée.

**17 -** Enduit selon la revendication 15 ou 16, caractérisé en ce que la teneur en agent fluidifiant est comprise entre 0 ‰ et 5 ‰.

**18 -** Enduit selon la revendication 17, caractérisé en ce que la teneur en agent fluidifiant est comprise entre 1,0 ‰ et 2,5 ‰ .

**19 -** Enduit selon la revendication 7 ou 15, caractérisé en ce qu'il comprend en outre de l'alcool polyvinylique

**20 -** Enduit selon la revendication 15 ou 19, caractérisé en ce que l'agent collant est utilisé à raison de 0 % à 2 % de la quantité totale de matières sèches dans l'enduit.

**21 -** Enduit selon la revendication 20, caractérisé en ce que l'agent collant est utilisé à raison de 0,5 % à 1 % de la quantité totale de matières sèches dans l'enduit.

**22 -** Enduit selon la revendication 15, caractérisé en ce que l'agent floculant est choisi parmi les polyacrylamides.

**23 -** Enduit selon la revendication 22, caractérisé en ce que les polyacrylamides sont utilisés à raison de 0 ‰ à 0,3 ‰ de la quantité totale de matières sèches dans l'enduit.

**24 -** Enduit selon la revendication 15, caractérisé en ce que l'agent mouillant est un laurylsulfate de sodium et en ce qu'il est utilisé à raison de 0 ‰ à 0,5 ‰ de la quantité totale de matières sèches dans l'enduit.

**25 -** Enduit selon la revendication 24, caractérisé en ce que le laurylsulfate de sodium est utilisé à raison d'environ 0, 25 ‰ de la quantité totale de matières sèches dans l'enduit.

**26 -** Enduit selon l'une des revendications 1 à 25, caractérisé en ce que l'enduit comprend également un agent basique et de préférence du ciment Portland blanc.

**27 -** Enduit selon l'une des revendications 1 à 26, caractérisé en ce que l'enduit comprend également du mica, à raison d'environ 0 % à 5 % en poids de la quantité totale de matières sèches dans l'enduit.

**28 -** Enduit selon l'une des revendications 1 à 27, caractérisé en ce que l'enduit comprend également des fibres de renfort.

**29 -** Produit pour la préparation d'un enduit selon l'une des revendications 1 à 28, caractérisé par le fait qu'il comprend deux composants conservés séparément, respectivement un premier composant contenant le plâtre et tout ou partie des autres ingrédients à l'état pulvérulent et un second composant constitué du polymère en milieu aqueux, des autres ingrédients liquides et des ingrédients solides non inclus dans le premier composant.

**30 -** Produit selon la revendication 29, caractérisé en ce que le second composant comprend en outre la quantité d'eau néssaire au gâchage.

**31 -** Produit pour la préparation d'un enduit selon l'une des revendications 1 à 4 et 6 à 28, caractérisé par le fait qu'il est conservé sous la forme d'un composant unique et pulvérulent.

**32 -** Application de l'enduit décrit dans les revendications 1 à 28 à la réalisation de joints entre des panneaux situés dans le même plan ou dans deux plans différents formant un angle saillant ou rentrant, lesdits panneaux étant:

– soit constitués de plâtre, chargés ou non de fibres et enrobés ou non d'un revêtement minéral ou organique.

– soit constitués d'autres matériaux utilisés dans les ouvrages de second oeuvre du bâtiment, notamment le béton, le béton léger, le béton cellulaire, la terre cuite, l'amiante ciment ou les fibragglos.

Figure 1

Figure 3

Figure 4

Figure 5

Figure 6

Effort
en N/cm de joint

Figure 2

Figure 7

26

EP 0 496 682 A1

**Office européen des brevets**

# RAPPORT DE RECHERCHE EUROPEENNE

Numero de la demande

EP    92 42 0022
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 303 147 (H.S.ELDEN)<br><br>* colonne 1, ligne 10 - colonne 3, ligne 15; revendications * | 1,7,8,9, 11-13, 15,19, 27,32 | C04B28/14<br>C09D5/34<br>// (C04B28/14, 14:20, 14:28, 14:38, 24:16 24:22, 24:26, 24:38 , 40:06) |
| A | | 3-7,10, 14,24 | |
| | --- | | |
| D,X | EP-A-0 094 507 (GEBR. KNAUF WESTDEUTSCHE GIPSWERKE)<br><br>* page 4, ligne 13 - page 6, ligne 16; revendications * | 1,2,8, 11-13, 15,27,32 | |
| A | | 9 | |
| | --- | | |
| X | US-A-3 297 601 (E.MAYNARD ET AL.)<br><br>* colonne 3, ligne 36 - colonne 5, ligne 7; revendications 1,3,5,6,9-16 * | 1,2, 11-13, 15,27,32 | |
| | --- | | **DOMAINES TECHNIQUES RECHERCHES (Int. Cl.5)** |
| D,X | EP-A-0 303 071 (RIGIPS GMBH)<br><br>* page 3, ligne 4 - ligne 37; revendications * | 1,3-7, 11-13, 15,19,28 | C04B |
| A | | 2,8 | |
| | --- | | |
| A | CHEMICAL ABSTRACTS, vol. 95, no. 2, 13 Juillet 1981, Columbus, Ohio, US; abstract no. 11668M, page 285 ;<br>* abrégé *<br>& JP-A-56 017 963 (KURARAY CO.) | 1,3-8, 11,15, 19,22,28 | |
| | --- | | |
| D,A | EP-A-0 227 876 (RIGIPS GMBH)<br><br>* revendications 1,2 * | 1-8, 11-13, 15,19, 22,28 | |

Le présent rapport a été établi pour toutes les revendications

| Lieu de la recherche | Date d'achèvement de la recherche | Examinateur |
|---|---|---|
| LA HAYE | 06 MAI 1992 | THEODORIDOU E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

27

Office européen
des brevets

**RAPPORT DE RECHERCHE EUROPEENNE**

Numero de la demande

EP    92 42 0022
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| | --- | | |
| A | DE-A-2 264 075 (ARDEX CHEMIE GMBH) | 1,3-8, 11,15, 16,19,26 | |
| | ----- | | |
| | | | **DOMAINES TECHNIQUES RECHERCHES (Int. Cl.5)** |

Le présent rapport a été établi pour toutes les revendications

| Lieu de la recherche | Date d'achèvement de la recherche | Examinateur |
|---|---|---|
| LA HAYE | 06 MAI 1992 | THEODORIDOU E. |